# EUROPEAN PATENT APPLICATION

(11) **EP 4 723 325 A1**
(43) Date of publication of application: **08.04.2026**
(21) Application number: 23939093.3
(22) Date of filing: 30.06.2023
(51) Int. Cl.: H01M 50/204, H01M 50/244, H01M 50/249, H01M 50/289, H01M 50/236, H01M 10/613, H01M 10/6567, H01M 10/6556, H01M 50/24, H01M 50/242, H01M 50/507, H01R 25/16, H01B 5/02

(54) **BATTERY PACK AND ELECTRIC DEVICE**

(30) Priority: 29.05.2023 CN 202310618539; 29.05.2023 CN 202310624028; 29.05.2023 CN 202310624038
(71) Applicant: Eve Energy Co. Ltd., Huizhou, Guangdong 516000 (CN)
(72) Inventor: QIU, Wencong, Huizhou, Guangdong 516000 (CN); CHEN, Zhiwei, Huizhou, Guangdong 516000 (CN); CHEN, Zhaohai, Huizhou, Guangdong 516000 (CN)
(74) Representative: Zhu, Puxing
(86) International application number: PCT/CN2023/105404
(87) International publication number: WO 2024/244111

(57) **Abstract**

A battery pack (1) and an electric device. The battery pack (1) comprises a case (10), and a battery module (20) and a reinforcing module (12) which are located in the case (10); the battery module (20) comprises a plurality of cell groups (200); the reinforcing module (12) comprises a plurality of reinforcing beams (121); the plurality of reinforcing beams (121) are arranged at intervals in a first direction; two ends of each reinforcing beam (121) are respectively fixedly connected to the case (10); and a cell group (200) is arranged between every adjacent reinforcing beams (121). Thus, high-strength design is achieved while meeting the hardness requirements of a battery case.

## Description

### TECHNICAL FIELD

The present invention relates to a field of battery technologies, and in particular, to a battery pack and an electric device.

### BACKGROUND

As one of the core components of electric vehicles, a power battery serves as the energy hub of an electric vehicle, while a battery case, as the energy distribution unit of the power battery, plays an irreplaceable role in the vehicle. With the development of power battery technology, higher requirements have been imposed on the mechanical strength of the battery case.

In the related art, to enhance the anti-collision capability of the side of a battery case, a common approach is to add a reinforcement beam at a middle position inside the case body. The reinforcement beam improves the impact resistance of the battery case, enhances the mechanical performance of the case body, and includes a simple structure, light weight, and high reliability. However, for areas inside the battery case far from the reinforcement beam, when subjected to external impact, sidewalls of the case body still face risks of wear and cracking, which may lead to safety incidents. Additionally, in the related art, the reinforcement beam occupies a significant amount of internal space in the battery case, resulting in low space utilization.

### SUMMARY

Embodiments of the present invention provide a battery pack and an electric device to address or at least partially address the deficiencies in the background art mentioned above.

### Technical Solution

To achieve the above functions, the embodiments of the present invention provide technical solutions as follows:
In a first aspect, embodiments of the present invention provide a battery pack, including:
a case body;
a battery module located in the case body, wherein the battery module includes a plurality of cell groups spaced apart along a first direction, each of the plurality of cell groups includes a plurality of cells spaced apart along a second direction; and
a reinforcement module located in the case body, wherein the reinforcement module includes a plurality of reinforcement beams spaced apart along the first direction, two ends of each of the plurality of reinforcement beams are fixedly connected to the case body, and each of the cell groups is disposed between adjacent two of the plurality of reinforcement beams.

In a second aspect, embodiments of the present invention provide an electric device, the electric device including a battery pack, the battery pack including:
a case body;
a battery module located in the case body, wherein the battery module includes a plurality of cell groups, the plurality of cell groups are spaced apart along a first direction, each of the cell groups includes a plurality of cells, and the plurality of cells are spaced apart along a second direction; and
a reinforcement module located in the case body, wherein the reinforcement module includes a plurality of reinforcement beams, the plurality of reinforcement beams are spaced apart along the first direction, two ends of each of the reinforcement beams are fixedly connected to the case body, and each of the cell groups is disposed between adjacent two of the reinforcement beams.

### Beneficial Effects

The embodiments of the present invention provide a battery pack and an electric device, the battery pack includes a case body, a battery module, and a reinforcement module located in the case body, the battery module includes a plurality of cell groups, the plurality of cell groups are spaced apart along a first direction, each of the cell groups includes a plurality of cells, and the plurality of cells are spaced apart along a second direction. The reinforcement module includes a plurality of reinforcement beams, the plurality of reinforcement beams are spaced apart along the first direction, two ends of each of the reinforcement beams are fixedly connected to the case body, and each of the cell groups is disposed between adjacent two of the reinforcement beams, thereby achieving a high-strength design while meeting the hardness requirements of the battery case.

### BRIEF DESCRIPTION OF THE DRAWINGS

FIG. 1 is a schematic structural view of a battery pack provided by embodiments of the present invention;
FIG. 2 is an exploded view of the battery pack provided by embodiments of the present invention;
FIG. 3 is a schematic structural view of a case body provided by embodiments of the present invention;
FIG. 4 is a schematic structural view of a reinforcement module provided by embodiments of the present invention;
FIG. 5 is a schematic structural view of a liquid cooling module provided by embodiments of the present invention;
FIG. 6 is a schematic structural view of a support frame provided by embodiments of the present invention;
FIG. 7 is an enlarged schematic view of portion A in FIG. 6;
FIG. 8 is a top view of the battery pack provided by embodiments of the present invention;
FIG. 9 is a schematic structural view of a bottom plate provided by embodiments of the present invention;
FIG. 10 is a schematic structural view of a battery module acquiring integration assembly provided by embodiments of the present invention;
FIG. 11 is a schematic structural view of a first type of integrated busbar provided by embodiments of the present invention;
FIG. 12 is a front view of a busbar provided by embodiments of the present invention ;
FIG. 13 is a top view of the busbar provided by embodiments of the present invention;
FIG. 14 is a schematic view of the connection between the busbar and cells provided by embodiments of the present invention;
FIG. 15 is a schematic structural view of another integrated busbar provided by embodiments of the present invention;
FIG. 16 is an exploded schematic view of the integrated busbar provided by embodiments of the present invention;
FIG. 17 is an exploded view of the integrated busbar provided by embodiments of the present invention; and
FIG. 18 is a schematic structural view of an output busbar and an input busbar provided by embodiments of the present invention.

### DETAILED DESCRIPTION

In the description of the present invention, unless otherwise expressly specified and limited, the terms "connected" and "connection" should be understood in a broad sense, for example, as a fixed connection, a detachable connection, a mechanical connection, an electrical connection, a direct connection, an indirect connection through an intermediate medium, or an internal communication between two components or an interaction relationship between two components. For those skilled in the art, the specific meanings of the above terms in the present invention can be understood based on specific circumstances.

In the description of the present invention, unless otherwise expressly specified and limited, a first feature being "on" or "below" a second feature may include direct contact between the first feature and the second feature, or contact through another feature between them rather than direct contact. Furthermore, a first feature being "above," "over," or "on top of" a second feature includes the first feature being directly above or obliquely above the second feature, or merely indicates that the first feature is at a higher horizontal level than the second feature. A first feature being "below," "under," or "beneath" a second feature includes the first feature being directly below or obliquely below the second feature, or merely indicates that the first feature is at a lower horizontal level than the second feature.

Embodiments of the present invention provide a battery pack and an electric device. Detailed descriptions are provided below. It should be noted that an order of description of the following embodiments does not limit the preferred order of the embodiments.

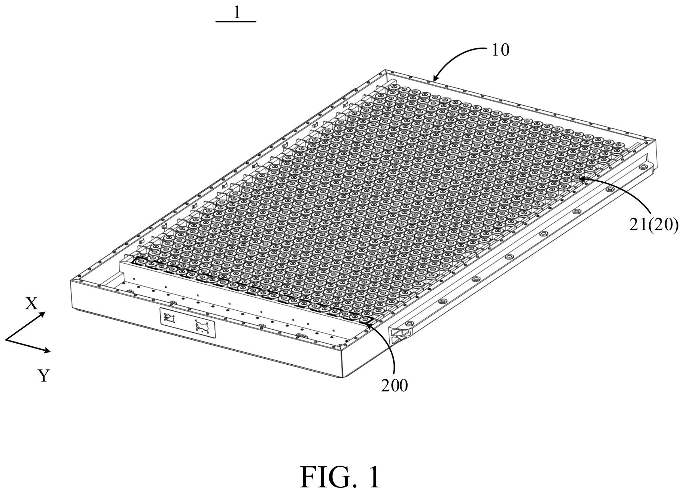

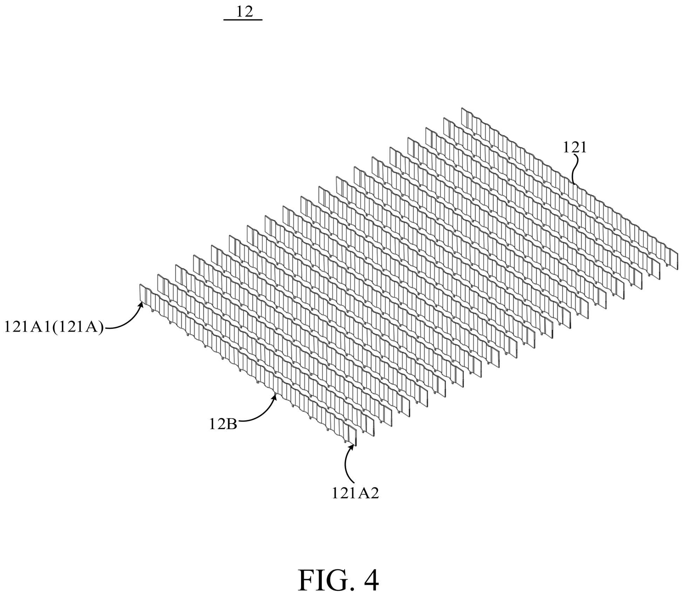

Referring to FIG. 1 to FIG. 9, embodiments of the present invention provide a battery pack and an electric device. The battery pack 1 includes a case body 10, a battery module 20, and a reinforcement module 12 located in the case body 10. The battery module 20 includes a plurality of cell groups 200, the plurality of cell groups 200 are spaced apart along a first direction X. Each of the cell groups 200 includes a plurality of cells 21, and the plurality of cells 21 are spaced apart along a second direction Y. The reinforcement module 12 includes a plurality of reinforcement beams 121, the plurality of reinforcement beams 121 are spaced apart along the first direction X, each end of each of the reinforcement beams 121 is fixedly connected to the case body 10, and each of the cell groups 200 is disposed between adjacent two of the reinforcement beams 121.

It should be noted that, in the related art, to enhance the anti-collision capability of the side of a battery case, a common approach is to add a reinforcement beam at the middle position inside the case body. The reinforcement beam improves the impact resistance of the battery case, enhances the mechanical performance of the case body, and includes a simple structure, light weight, and high reliability. However, for areas inside the battery case far from the reinforcement beam, when subjected to external impact, sidewalls of the case body still face risks of wear and cracking, which may lead to safety incidents. Additionally, in the related art, the reinforcement beam occupies a significant amount of internal space in the battery case, resulting in low space utilization.

It can be understood that, in embodiments of the present invention, by configuring the reinforcement module to include a plurality of reinforcement beams, the plurality of reinforcement beams being spaced apart along the first direction, each end of each of the reinforcement beams is fixedly connected to the case body, and each of the cell groups being disposed between adjacent two of the reinforcement beams, a high-strength design is achieved while meeting the hardness requirements of the battery case.

The technical solution of the present invention is described with reference to specific embodiments as follows.

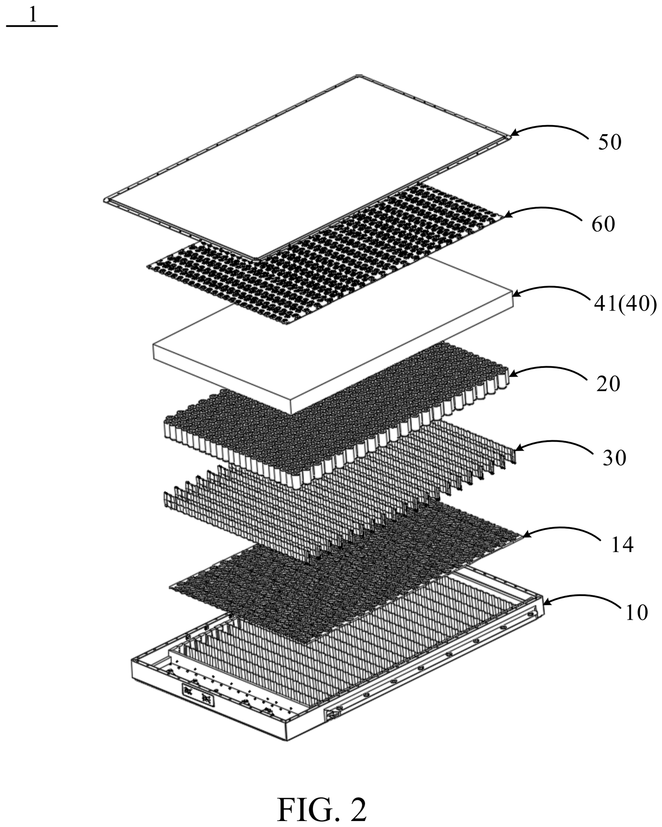

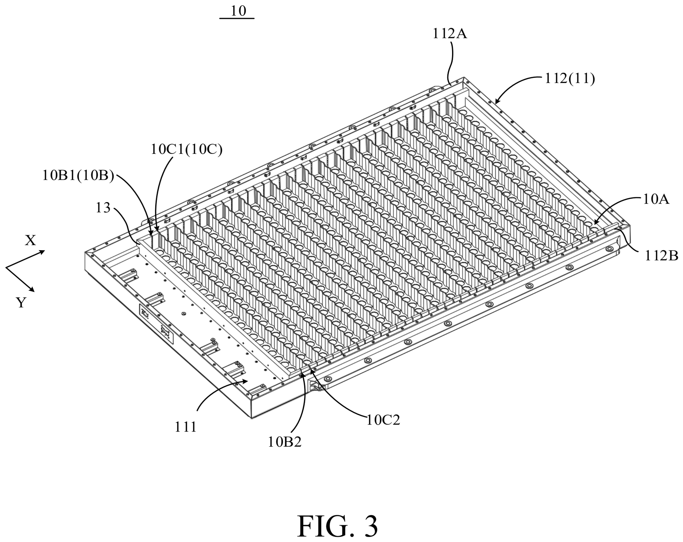

In one embodiment, referring to FIG. 1, FIG. 2, and FIG. 3, FIG. 1 is a schematic structural view of a battery pack provided by embodiments of the present invention, FIG. 2 is an exploded view of the battery pack provided by embodiments of the present invention, and FIG. 3 is a schematic structural view of a case body provided by embodiments of the present invention.

In embodiments of the present invention, the battery pack 1 includes a case cover 50 and a case body 10. The case body 10 includes a bottom plate 111 and a plurality of side beams 112, the plurality of side beams 112 are fixedly disposed at an edge of the bottom plate 111 to collectively define an accommodation cavity 10A. The battery module 20, the reinforcement module 12, and a liquid cooling module 30 are disposed in the accommodation cavity 10A. The case cover 50 is disposed opposite the bottom plate 111, and the case cover 50 is configured to seal the accommodation cavity 10A.

In embodiments of the present invention, the case body 10 includes a crossbeam 13, the bottom plate 111, and the plurality of side beams 112. The plurality of side beams 112 are sequentially connected to collectively define a ring structure, and two ends of the crossbeam 13 abut against the side beams 112 such that the bottom plate 111, the crossbeam 13, and the plurality of side beams 112 form the accommodation cavity 10A configured to accommodate the battery module 20.

Further, the reinforcement module 12 includes a plurality of reinforcement beams 121, the plurality of reinforcement beams 121 are spaced apart along the first direction X, and two ends of each of the reinforcement beams 121 are fixedly connected to the side beams 112. The liquid cooling module 30 includes a plurality of liquid cooling plates 31, the plurality of liquid cooling plates 31 are spaced apart along the first direction X, the plurality of liquid cooling plates 31 and the plurality of reinforcement beams 121 are alternately spaced apart along the first direction X, and one cell group 200 is disposed between the liquid cooling plate 31 and the reinforcement beam 121 adjacent to each other.

The battery module 20 includes a plurality of cell groups 200, the plurality of cell groups 200 are spaced apart along the first direction X, each of the cell groups 200 includes a plurality of cells 21, the plurality of cells 21 are spaced apart along the second direction Y, and one cell group 200 is disposed between the liquid cooling plate 31 and the reinforcement beam 121 adjacent to each other. Specifically, in embodiments of the present invention, the reinforcement beam 121 and/or the liquid cooling plate 31 abuts against outer peripheral surfaces of the cells 21 on two sides of the liquid cooling plate 31, and the reinforcement beam 121 and/or the liquid cooling plate 31 is adapted to the outer peripheral surfaces of the cells 21. Preferably, in embodiments of the present invention, both the reinforcement beam 121 and the liquid cooling plate 31 abut against the outer peripheral surfaces of the cells 21 on two sides of each of the reinforcement beam 121 and the liquid cooling plate 31, and both the reinforcement beam 121 and the liquid cooling plate 31 are adapted to the outer peripheral surfaces of the cells 21.

Specifically, in embodiments of the present invention, the cell 21 is a cylindrical cell, the cell group 200 includes a plurality of cylindrical cells, the reinforcement beam 121 abuts against the outer peripheral surface of the cylindrical cells 21 on two sides of the reinforcement beam 121. The reinforcement beam 121 includes a serpentine corrugated structure adapted to a cylindrical surface of the cylindrical cells 21. The liquid cooling plate 31 abuts against the outer peripheral surface of the cylindrical cells 21 on two sides of the liquid cooling plate 31. The liquid cooling plate 31 includes a serpentine corrugated structure adapted to the cylindrical surface of the cylindrical cells 21.

It should be noted that, in embodiments of the present invention, a thickness of the reinforcement beam 121 is greater than or equal to 1 millimeter and less than or equal to 4 millimeters, an inner diameter length of adjacent liquid cooling plates 31 is equal, the first direction is denoted by X, the second direction is denoted by Y, and the first direction X forms a preset angle with the second direction Y. Preferably, the thickness of the reinforcement beam 121 is one of 1 millimeter, 2 millimeters, or 3 millimeters, and the preset angle is a right angle.

It can be understood that, in embodiments of the present invention, by configuring the reinforcement beam 121 to include a serpentine corrugated structure adapted to the cylindrical surface of the cells 21, the structure of the reinforcement beam 121 is added in a gap between adjacent two of the cell groups 200, increasing a space utilization rate of the battery pack 1. Also, the reinforcement beams 121 are evenly distributed to be able to effectively disperse force and reduce stress concentration, and thereby enhancing the strength of the battery pack 1. Simultaneously, by configuring the liquid cooling plate 31 to abut against the outer peripheral surfaces of the cells 21 on two sides of the liquid cooling plate 31 with the liquid cooling plate 31 including a serpentine corrugated structure adapted to the cylindrical surface of the cells 21, the liquid cooling plate 31 can be closely attached to the outer peripheral surface of the cylindrical cells 21, thereby improving a cooling effect. Furthermore, the plurality of liquid cooling plates 31 and the plurality of reinforcement beams 121 are alternately spaced apart along the first direction X, with one cell group 200 disposed between the liquid cooling plate 31 and the reinforcement beam 121 adjacent to each other, thereby isolating each of the cell groups 200 individually, preventing a fire in a single cell group 200 from causing a chain thermal runaway in other cell groups 200, and ultimately avoiding scrapping of the battery.

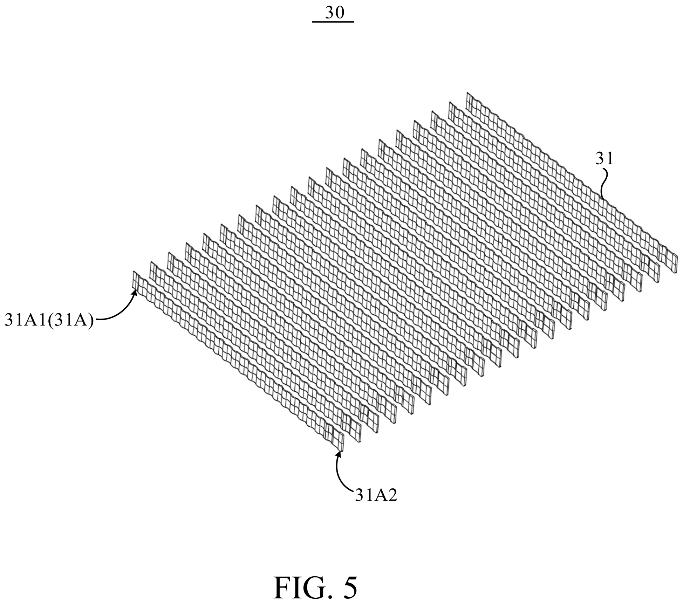

Further, referring to FIG. 1, FIG. 3, FIG. 4, and FIG. 5, FIG. 4 is a schematic structural view of a reinforcement module provided by embodiments of the present invention; and FIG. 5 is a schematic structural view of a liquid cooling module provided by embodiments of the present invention.

In embodiments of the present invention, a side of the side beam 112 adjacent to the reinforcement beam 121 is provided with a plurality of first recesses 10B and a plurality of second recesses 10C, and the plurality of first recesses 10B and the plurality of second recesses 10C are alternately spaced apart along the first direction X. A side of the liquid cooling plate 31 adjacent to the side beam 112 is provided with a plurality of first inserting portion 31A, and one of the plurality of first inserting portion 31A is inserted into a corresponding one of the first recesses 10B. A side of the reinforcement beam 121 adjacent to the side beam 112 is provided with a plurality of second inserting portions 121A, and the plurality of second inserting portion 121A is inserted into a corresponding one of the second recesses 10C. Specifically, the second inserting portion 121A is fixed into the second recess 10C by welding.

In embodiments of the present invention, the case body 10 further includes a first side beam 112A and a second side beam 112B disposed opposite to each other, a first end of the crossbeam 13 abuts against the first side beam 112A, and a second end of the crossbeam 13 abuts against the second side beam 112B. The reinforcement beam 121 is located between the first side beam 112A and the second side beam 112B, and an extension direction of the reinforcement beam 121 is parallel to an extension direction of the crossbeam 13. The liquid cooling plate 31 is located between the first side beam 112A and the second side beam 112B, and an extension direction of the liquid cooling plate 31 is parallel to the extension direction of the crossbeam 13.

The first recess 10B includes a first sub-recess 10B1 and a third sub-recess 10B2, the second recess 10C includes a second sub-recess 10C1 and a fourth sub-recess 10C2. Specifically, a side of the first side beam 112A adjacent to the reinforcement module 12 is provided with a plurality of first sub-recesses 10B1 and a plurality of second sub-recesses 10C1, the plurality of first sub-recesses 10B1 and the plurality of second sub-recesses 10C1 are alternately spaced apart along the first direction X. A side of the second side beam 112B adjacent to the reinforcement module 12 is provided with a plurality of third sub-recesses 10B2 and a plurality of fourth sub-recesses 10C2, and the plurality of third sub-recesses 10B2 and the plurality of fourth sub-recesses 10C2 are alternately spaced apart along the first direction X. One of the plurality of first sub-recesses 10B1 corresponds to one of the plurality of third sub-recesses 10B2. A liquid cooling plate 31 is located between a first sub-recess 10B1 and a third sub-recess 10B2. One of the plurality of second sub-recesses 10C1 corresponds to one of the plurality of fourth sub-recesses 10C2, and a reinforcement beam 121 is located between a second sub-recess 10C1 and a fourth sub-recess 10C2.

The first inserting portion 31A includes a first sub-inserting portion 31A1 and a second sub-inserting portion 31A2, and the second inserting portion 121A includes a third sub-inserting portion 121A1 and a fourth sub-inserting portion 121A2. Specifically, the liquid cooling plate 31 includes a first sub-inserting portion 31A1 and a second sub-inserting portion 31A2, the liquid cooling plate 31 is inserted into the first sub-recess 10B1 via the first sub-inserting portion 31A1, and the liquid cooling plate 31 is inserted into the third sub-recess 10B2 via the second sub-inserting portion 31A2. The reinforcement beam 121 includes a third sub-inserting portion 121A1 and a fourth sub-inserting portion 121A2, the reinforcement beam 121 is inserted into the second sub-recess 10C1 via the third sub-inserting portion 121A1, and the reinforcement beam 121 is inserted into the fourth sub-recess 10C2 via the fourth sub-inserting portion 121A2. The third sub-inserting portion 121A1 is fixed into the second sub-recess 10C1 by welding, and the fourth sub-inserting portion 121A2 is fixed into the fourth sub-recess 10C2 by welding.

It can be understood that, in embodiments of the present invention, by configuring the liquid cooling plate 31 to be inserted into the first sub-recess 10B1 via the first sub-inserting portion 31A1, the liquid cooling plate 31 to be inserted into the third sub-recess 10B2 via the second sub-inserting portion 31A2, the reinforcement beam 121 to be inserted into the second sub-recess 10C1 via the third sub-inserting portion 121A1, and the reinforcement beam 121 to be inserted into the fourth sub-recess 10C2 via the fourth sub-inserting portion 121A2, the assembly efficiency is improved when assembling the liquid cooling plate 31 and the reinforcement beam 121, thereby enhancing the production capacity of the battery pack 1. Simultaneously, by configuring the first sub-recess 10B1 and the third sub-recess 10B2 to limit the position of the liquid cooling plate 31, the third sub-inserting portion 121A1 and the second sub-recess 10C1 being fixed by welding, the fourth sub-inserting portion 121A2 and the fourth sub-recess 10C2 being fixed by welding, the second sub-recess 10C1 and the fourth sub-recess 10C2 being configured to limit the position of the reinforcement beam 121, movement of the liquid cooling plate 31 and the reinforcement beam 121 during external impact on the battery pack 1 is prevented, thereby enhancing the stability of the battery pack 1.

It should be noted that embodiments of the present invention do not specifically limit the positions of the recesses and inserting portions. Embodiments of the present invention merely take as an example that a side of the side beam 112 adjacent to the reinforcement beam 121 is provided with a plurality of first recesses 10B and a plurality of second recesses 10C, the plurality of first recesses 10B and the plurality of second recesses 10C are alternately spaced apart along the first direction X, a side of the liquid cooling plate 31 adjacent to the side beam 112 is provided with a first inserting portion 31A, and a side of the reinforcement beam 121 adjacent to the side beam 112 is provided with a second inserting portion 121A, to illustrate the technical solution of the present invention.

For example, in another embodiment, a side of the side beam 112 adjacent to the reinforcement beam 121 is provided with a plurality of first inserting portions 31A and a plurality of second inserting portions 121A, and the plurality of first inserting portions 31A and the plurality of second inserting portions 121A are alternately spaced apart along the first direction X. A side of the liquid cooling plate 31 adjacent to the side beam 112 is provided with a first recess 10B, and a side of the reinforcement beam 121 adjacent to the side beam 112 is provided with a second recess 10C.

Further, in embodiments of the present invention, the battery pack 1 further includes a colloid element 40, and the colloid element 40 is sleeved on an outer surface of each of the cells 21. Specifically, the colloid element 40 is disposed in the accommodation cavity 10A, and the colloid element 40 includes, but not limited to, an expanding foam 41. The expanding foam 41 is provided with a plurality of openings (not shown in the figures). One of the plurality of openings corresponds to one of the plurality of cells 21. An outer sidewall of the cell 21 is adhered to an inner wall of the opening.

Specifically, the cell 21 passes through the opening and is fixed on the bottom plate 111, the expanding foam fills a gap space between adjacent two of the cells 21, thereby preventing contact and collision between adjacent two of the cells 21 during use, providing a buffering effect. Additionally, the expanding foam includes thermal insulation properties to effectively protect against the risk of thermal runaway or overheating of a single or multiple cells 21 in the battery module 20 transferring to adjacent two of the cells 21, prevent the spread of thermal runaway, and improve the safety of the battery module 20, thereby avoiding the defect in the related art where thermal runaway of a single cell leads to chain thermal runaway of multiple or all cells, making the cells non-replaceable and requiring scrapping, and thus increasing the usage cost of the battery module.

It can be understood that, in embodiments of the present invention, by using the reinforcement beam 121, the liquid cooling plate 31, and the colloid element 40 to isolate and fireproof each of the cells 21 individually, heat transfer from a single cell 21 undergoing thermal runaway to adjacent two of the cells 21 is prevented, thereby avoiding the defect in the related art where thermal runaway of a single cell 21 leads to chain thermal runaway of multiple or all cells 21, making the cells 21 non-replaceable and requiring scrapping, and thus increasing the usage cost of the battery module 20, and improving the safety of the battery pack 1.

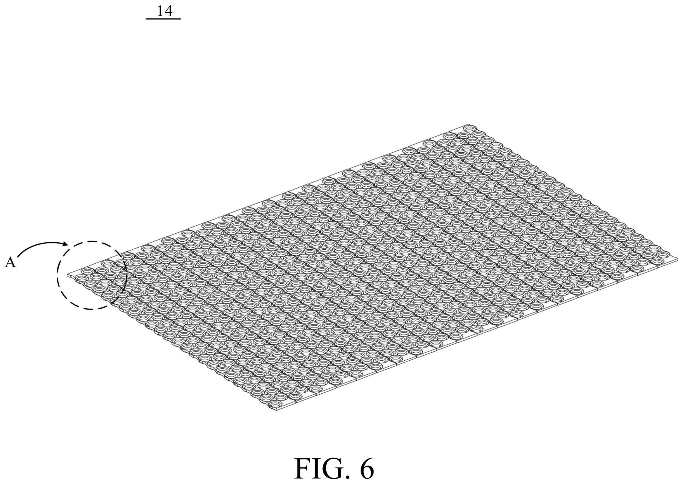

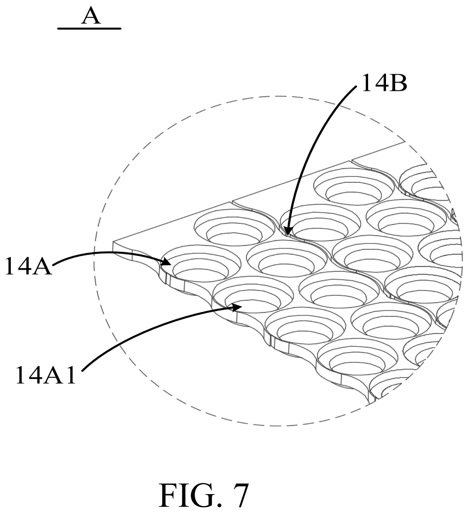

Further, referring to FIG. 1, FIG. 2, FIG. 6, and FIG. 7, FIG. 6 is a schematic structural view of a support frame provided by embodiments of the present invention. FIG. 7 is an enlarged schematic view of portion A in FIG. 6.

In embodiments of the present invention, the case body 10 further includes a support frame 14, the support frame 14 is disposed between the bottom plate 111 and the battery module 20, and the support frame 14 is fixedly connected to the reinforcement module 12 and the bottom plate 111, respectively. The support frame 14 is provided with a plurality of mounting slots 14A. A depth of the mounting slot 14A is less than a thickness of the support frame 14, one of the plurality of mounting slots 14A corresponds to one of the plurality of cells 21, and the cell 21 is placed in the mounting slot 14A.

Specifically, in embodiments of the present invention, adjacent two of the mounting slots 14A are arranged side-by-side or staggered, the mounting slot 14A is a recess formed by the support frame 14 indented toward a side away from the battery module 20, a shape of the mounting slot 14A matching a shape of the cell 21. Further, the mounting slot 14A is cylindrical, and an inner wall of the mounting slot 14A abuts against an outer peripheral surface of the cell 21. Embodiments of the present invention, by configuring the cell 21 to be placed in the mounting slot 14A, with the mounting slots corresponding to the cell 21 respectively, allow multiple cells 21 to be installed simultaneously during assembly, thereby greatly improving the assembly efficiency of the battery pack 1, ensuring assembly accuracy, and facilitating automation. Structural adhesive may be used to fixedly connect the support frame 14 to the cells 21, thereby providing a convenient and reliable connection and effectively preventing the cells 21 from loosening or detaching.

Preferably, the aperture sizes of the plurality of mounting slots 14A are equal, and adjacent two of the mounting slots 14A are staggered. It can be understood that the staggered mounting slots 14A can reduce bending stress on the support frame 14 when subjected to force, thereby avoiding adverse phenomena such as bending of the support frame 14.

In embodiments of the present invention, the support frame 14, the bottom plate 111, and the side beams 112 collectively define a pressure relief cavity. The support frame 14 is further provided with a plurality of first through holes 14A1. One of the plurality of first through holes 14A1 corresponds to one of the plurality of mounting slots 14A. An aperture diameter of the first through hole 14A1 is less than a diameter of the mounting slot 14A. The first through hole 14A1 extends through the mounting slot 14A, and the first through hole 14A1 communicates with the pressure relief cavity.

Specifically, in embodiments of the present invention, the first through hole 14A1 is a pressure relief hole, the aperture diameter of the first through hole 14A1 is less than the diameter of the mounting slot 14A, and the pressure relief cavity communicates with the mounting slot 14A via the first through hole 14A1. The design of the pressure relief cavity reduces the impact generated when the cell 21 bursts, thereby improving the safety of the battery module 20 operation. Simultaneously, configuring the first through hole 14A1 enables rapid dissipation of heat from the cell 21 or gases generated during thermal runaway from a bottom of the cell 21, thereby enhancing heat dissipation effects and increasing the safety performance of the battery pack 1 structure. It should be noted that, in embodiments of the present invention, a material of the case body is a metal material, the support frame 14 is made of plastic or other materials with good insulation properties, and a placement portion can prevent a bottom surface of the cell 21 from contacting the bottom plate 111, thereby providing insulation protection.

In embodiments of the present invention, one of the support frame 14 and the reinforcement beam 121 is provided with a plurality of fixing holes 14B, and the other is provided with a plurality of protrusions 12B. One of the plurality of protrusions 12B corresponds to one of the plurality of fixing holes 14B. The protrusion 12B is snap-fitted into the fixing hole 14B.

Preferably, in embodiments of the present invention, the support frame 14 includes a plurality of fixing holes 14B, and the fixing holes 14B extends through the support frame 14. A side of the reinforcement beam 121 adjacent to the support frame 14 includes a plurality of protrusions 12B. One of the plurality of protrusions 12B corresponds to one of the plurality of fixing holes 14B. The protrusion 12B is snap-fitted into the fixing hole 14B, and the protrusion 12B and the support frame 14 are fixed by welding. Preferably, the protrusion 12B of the reinforcement beam 121 and the support frame 14 are fixed by spot welding, and a welding point is located on a side of the support frame 14 adjacent to the bottom plate 111.

It can be understood that the support frame 14 is provided with a plurality of mounting slots 14A reducing the rigidity of the support frame 14. Embodiments of the present invention, by fixing the protrusion 12B of the reinforcement beam 121 to the support frame 14 by spot welding, increase the rigidity of the support frame 14, thereby enhancing the stability of the case body 10.

Specifically, in embodiments of the present invention, the fixing hole 14B is located between adjacent two of the mounting slots 14A, the fixing hole 14B is spaced apart from the mounting slot 14A, and an aperture of the fixing hole 14B is less than an aperture of the first through hole 14A1. One of the plurality of protrusions 12B corresponds to one of the plurality of fixing holes 14B. The protrusion 12B passes through the fixing hole 14B, and the protrusion 12B and the support frame 14 are fixed by welding, with a welding point located on a side of the support frame 14 away from the reinforcement beam 121.

It can be understood that, in embodiments of the present invention, by configuring the support frame 14 to include a plurality of fixing holes 14B, a side of the reinforcement beam 121 adjacent to the support frame 14 including a plurality of protrusions 12B, the protrusion 12B snap-fitted into the fixing hole 14B, and the protrusion 12B and the support frame 14 fixed by welding, the fixing strength between the reinforcement beam 121 and the support frame 14 is enhanced, thereby increasing the structural strength of the case body 10. Simultaneously, during a collision, the support frame 14 can provide a certain support force to each of the battery modules 20, to effectively improve the installation stability of each of the battery modules 20, thereby further enhancing the protective effect of the case body 10 on each of the battery modules 20.

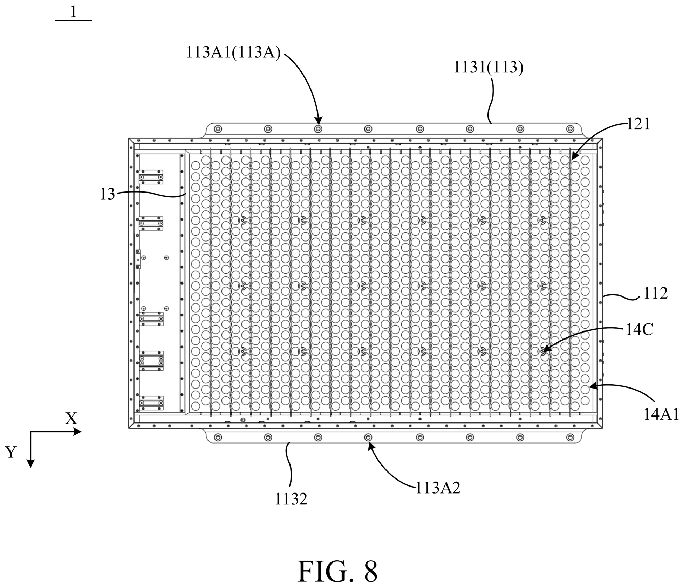

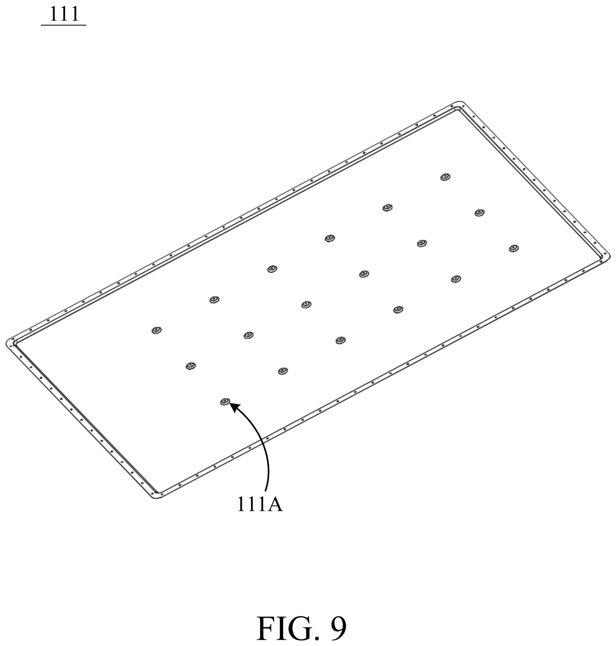

Further, referring to FIG. 8 and FIG. 9, FIG. 8 is a top view of a battery pack provided by embodiments of the present invention, and FIG. 9 is a schematic structural view of a bottom plate provided by embodiments of the present invention.

In embodiments of the present invention, the support frame 14 is provided with a plurality of holes 14C. The bottom plate 111 is provided with a plurality of connection holes 111A, and one of the plurality of connection holes 111A corresponds to one of the plurality of holes 14C. The case body 10 includes a plurality of fixing members 15, and one of the plurality of fixing members 15 corresponds to one of the plurality of holes 14C. The fixing member 15 sequentially passes through the hole 14C and the connection hole 111A and is fixedly connected to the bottom plate 111. Specifically, the fixing member 15 is threadedly connected to the bottom plate 111 through the hole 14C, and the support frame 14 is fixedly connected to the bottom plate 111 via the fixing member 15.

Specifically, the hole 14C is spaced apart from the fixing hole 14B, the hole 14C is spaced apart from the mounting slot 14A, and the fixing member 15 includes, but is not limited to, a bolt. It can be understood that, in embodiments of the present invention, by configuring the fixing member 15 to be threadedly connected to the bottom plate 111 through the hole 14C and configuring the support frame 14 to be fixedly connected to the bottom plate 111 via the fixing member 15, the structural stability of the case body 10 is enhanced.

Further, in embodiments of the present invention, the case body 10 further includes two longitudinal beams 113 disposed opposite to each other along the second direction Y. Each longitudinal beam 113 is located on a side of the side beam 112 away from the reinforcement beam 121, and the longitudinal beam 113 is provided with a plurality of mounting parts 113A spaced apart along the first direction X. The reinforcement beam 121 is located between the two longitudinal beams 113, and the mounting parts 113A correspond one-to-one with the reinforcement beams 121. The mounting part 113A is configured to be connected to a mounting portion of a vehicle body to install the case body 10 onto the vehicle body.

Specifically, in embodiments of the present invention, the case body 10 includes a first longitudinal beam 1131 and a second longitudinal beam 1132 disposed opposite to each other along the second direction Y, the first longitudinal beam 1131 is located on a side of the first side beam 112A away from the reinforcement beam 121, and the second longitudinal beam 1132 is located on a side of the second side beam 112B away from the reinforcement beam 121. The first longitudinal beam 1131 is provided with a plurality of first mounting parts 113A1 spaced apart along the first direction X. The second longitudinal beam 1132 is provided with a plurality of second mounting parts 113A2 spaced apart along the first direction X. One of the plurality of first mounting parts 113A1 corresponds to one of the plurality second mounting parts 113A2. The reinforcement beam 121 is located between the first longitudinal beam 1131 and the second longitudinal beam 1132, and an extension direction of the reinforcement beam 121 is consistent with a force transmission direction at the mounting part 113A to enhance the load-bearing capacity of the mounting part 113A, thereby enhancing the mounting strength of the entire case body 10.

It should be noted that, in embodiments of the present invention, the first longitudinal beam 1131 and the first side beam 112A may be integrally formed, and the second longitudinal beam 1132 and the second side beam 112B may be integrally formed, thereby further enhancing the structural strength of the mounting part 113A and the structural stability of the entire battery case.

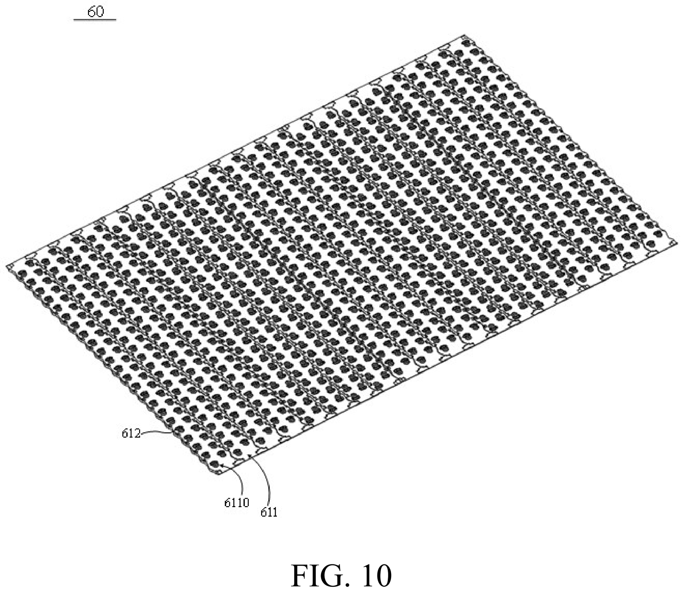

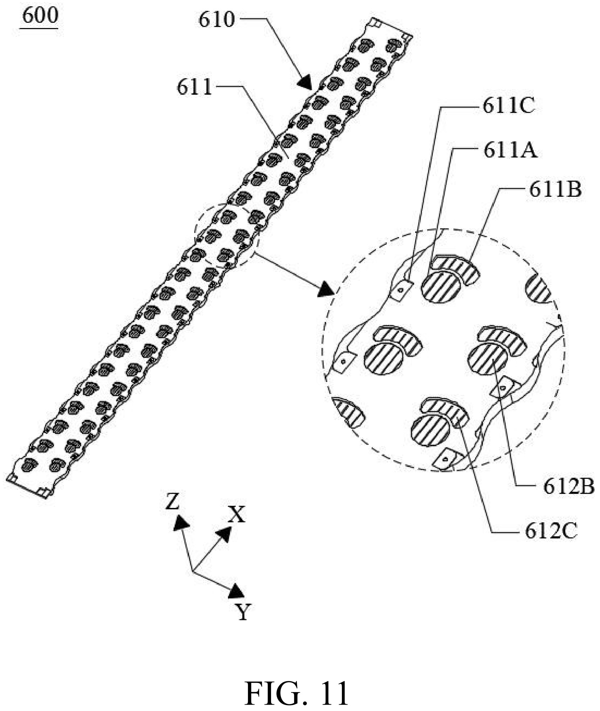

Further, referring to FIG. 1, FIG. 2, FIG. 10, and FIG. 11, FIG. 10 is a schematic structural view of a battery module acquiring integration assembly provided by embodiments of the present invention; and FIG. 11 is a schematic structural view of a first type of integrated busbar provided by embodiments of the present invention.

In embodiments of the present invention, the battery pack 1 further includes a battery module acquiring integration assembly 60 (Cell Contacting System, CCS component), the battery module acquiring integration assembly 60 is disposed on a side of the battery module 20 away from the bottom plate 111, the battery module acquiring integration assembly 60 includes: a fixing frame 611, wherein the fixing frame 611 is provided with a hollow portion 6110; and a busbar 612, wherein the busbar 612 is arranged in the hollow portion 6110, and the busbar 612 contacts and electrically connects the cell 21.

Specifically, in embodiments of the present invention, the battery module acquiring integration assembly 60 includes an integrated busbar 600 configured to electrically connect the plurality of cells 21, and the integrated busbar 600 includes at least one busbar unit 610. The busbar unit 610 includes the fixing frame 611 and the plurality of busbars 612, and the busbar 612 are located in the fixing frame 611.

In one embodiment, the busbar 612 and the fixing frame 611 may be integrally injection-molded.

Specifically, a material of the busbar 612 is metal and specifically includes, but not limited to, conductive materials such as aluminum, copper, or nickel, or other non-metal conductive materials. A material of the fixing frame 611 is an insulating material such as plastic. In an actual manufacturing process, the plurality of busbars 612 are first placed in a mold, then plastic material is injected into the mold, and after the plastic material cools and is demolded, the busbar unit 610 is formed.

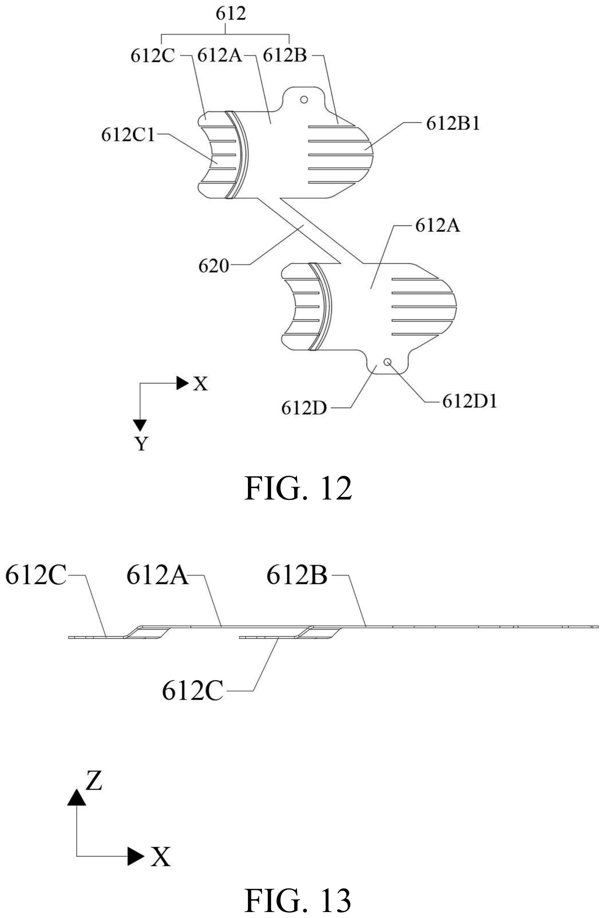

Further, referring to FIG. 12 and FIG. 13, FIG. 12 is a front view of a busbar provided by embodiments of the present invention, and FIG. 13 is a top view of the busbar provided by embodiments of the present invention.

The busbar 612 includes a main body portion 612A, a first conductive portion 612B, and a second conductive portion 612C. The first conductive portion 612B is disposed at a first end of the main body portion 612A and is connected to the main body portion 612A. The second conductive portion 612C is disposed at an opposite second end of the main body portion 612A and is connected to the main body portion 612A.

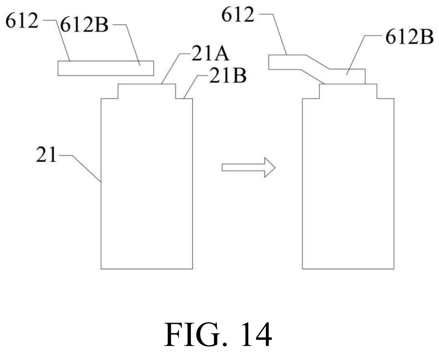

Referring to FIG. 14, FIG. 14 is a schematic view of the connection between the busbar and cells provided by embodiments of the present invention, the cell 21 specifically refers to a cylindrical cell, a positive electrode 21A and a negative electrode 21B of the cell 21 both are at the same end of the cylindrical cell, the positive electrode 21A is a protruding cylinder at one end of the cell 21, the negative electrode 21B is a top cover at one end of the cell 21, the negative electrode 21B is annular, and the positive electrode 21A is located at the center of the annular shape.

The first conductive portion 612B of the busbar 612 is configured to be electrically connected to the positive electrode 21A of the cell 21, and the second conductive portion 612C is configured to be electrically connected to the negative electrode 21B of another cell 21 adjacent to the cell 21.

In one embodiment, the first conductive portion 612B is fixedly connected to the positive electrode 21A by welding, and the second conductive portion 612C is fixedly connected to the negative electrode 21B by welding.

In the same busbar unit, a plurality of busbars 612 spaced apart along the first direction X can connect the plurality of cells 21 arranged along the first direction X in series, and at least two busbars 612 spaced apart along the second direction Y can connect at least two cells 21 arranged along the second direction Y in parallel.

In one embodiment, referring to FIG. 12 and FIG. 13, the busbar 612 is overall sheet-like, the sheet-like structure significantly reduces the weight of the busbar, thereby reducing the overall weight of the battery module, and minimizing the space occupied by the busbar in the battery module, which is beneficial to improving the energy density of the battery module.

In one embodiment, the main body portion 612A, the first conductive portion 612B, and the second conductive portion 612C are an integral structure, which can be formed by stamping or other processes. In other embodiments, the main body portion 612A, the first conductive portion 612B, and the second conductive portion 612C may be separate structures, with the components connected by welding or bonding.

Referring to FIG. 12, the first conductive portion 612B includes a plurality of first conductive sub-portions 612B1 arranged side-by-side and spaced apart from each other, and a portion between adjacent two of the first conductive sub-portions 612B1 is hollowed out. The second conductive portion 612C includes a plurality of second conductive sub-portions 612C1 arranged side-by-side and spaced apart from each other, and a portion between adjacent two of the second conductive sub-portions 612C1 is hollowed out. The fixing frame 611 wraps the main body portion 612A and exposes the first conductive sub-portions 612B1 and the second conductive sub-portions 612C1.

Referring to FIG. 11, the first conductive portion 612B includes a plurality of first conductive sub-portions 612B1 spaced apart from each other, the plurality of first conductive sub-portions 612B1 are elongated sheet-like structures spaced apart from each other, and a portion between adjacent two of the first conductive sub-portions 612B1 is hollowed out. The first conductive portion 612B overall includes a comb-like structure. The second conductive portion 612C includes a plurality of second conductive sub-portions 612C1 spaced apart from each other, the plurality of second conductive sub-portions 612C1 are elongated flat sheet-like structures spaced apart from each other, and a portion between adjacent two of the second conductive sub-portions 612C1 is hollowed out. The second conductive portion 612C overall also includes a comb-like structure.

Further, the fixing frame 611 includes a plurality of first hollow portions 611A and a plurality of second hollow portions 611B formed in the fixing frame 611. The first hollow portion 611A and the second hollow portion 611B both extend through the fixing frame 611 in a third direction Z (i.e., the Z-axis direction in FIG. 1). The first hollow portion 611A is adjacent to and spaced apart from the second hollow portion 611B. The first hollow portion 611A exposes opposite surfaces of the first conductive sub-portion 612B1. The second hollow portion 611B exposes opposite surfaces of the second conductive sub-portion 612C1. The fixing frame 611 wraps opposite surfaces of the main body portion 612A, thus preventing short circuits due to contact between busbars of adjacent two of the cells 21.

In one embodiment, the first hollow portion 611A is circular, a size of the first hollow portion 611A matching a size of the positive electrode of the cell 21, so that the positive electrode of the cell 21 can pass through the first hollow portion 611A to provide a certain positioning effect for the positive electrode of the cell 21, facilitate assembly, and improve the positioning accuracy of the first conductive portion 612B with the positive electrode of the cell 21, thereby ensuring the stability of the electrical connection between the first conductive portion 612B and the positive electrode of the cell 21.

In one embodiment, the second hollow portion 611B is fan-annular, and a size of the second hollow portion 611B matches a size of the negative electrode of the cell 21, thus to improve the alignment accuracy of the second conductive portion 612C with the negative electrode of the cell 21, while saving space and ensuring sufficient contact between the negative electrode and the second conductive sub-portion 612C1 exposed by the second hollow portion 611B, thereby ensuring the stability of the electrical connection between the negative electrode and the second conductive portion 612C.

It should be noted that, in the related art, during assembly of an integrated busbar, due to factors such as the flatness of the integrated busbar itself and height differences among cells, some cells have a height difference with the busbar in the integrated busbar, making it difficult to press the busbar to closely contact the cells during welding, ultimately leading to poor welding. Specifically, in the related art, the first conductive portion and the second conductive portion of the busbar are complete sheet-like structures, with relatively high rigidity, making deformation difficult, and during welding, it is challenging to press the first conductive portion and the second conductive portion to closely contact the electrodes of the cells.

Taking the first conductive portion 612B as an example, the embodiment of the present invention, by dividing the first conductive portion 612B into a plurality of elongated sheet-like first conductive sub-portions 612B1, the rigidity of the plurality of first conductive sub-portions 612B1 is significantly lower than that of the complete sheet-like first conductive portion in the related art, thus improving the deformation capability of the first conductive portion 612B. Simultaneously, since opposite surfaces of the main body portion 612A are wrapped by the fixing frame 611, the main body portion 612A can be supported by the fixing frame 611. The fixing frame 611 also wraps an end of the first conductive sub-portion 612B1 adjacent to the main body portion 612A to fix the end of the first conductive sub-portion 612B1 adjacent to the main body portion 612A. The first hollow portion 611A exposes an end of the first conductive sub-portion 612B1 away from the main body portion 612A. The first conductive sub-portion 612B1 is suspended below with a gap between the first conductive sub-portion 612B1 and the positive electrode of the cell 21. The first conductive sub-portion 612B1 forming a cantilever-like structure to enable easy deformation during welding to closely contact the electrode of the cell 21, thereby addressing the issue of poor welding between the busbar and the cell 21.

Similarly, the embodiment of the present invention, by dividing the second conductive portion 612C into a plurality of elongated sheet-like second conductive sub-portions 612C1, the rigidity of the plurality of second conductive sub-portions 612C1 is significantly lower than that of the complete sheet-like second conductive portion in the related art, thus improving the deformation capability of the second conductive portion 612C. Simultaneously, since opposite surfaces of the main body portion 612A are wrapped by the fixing frame 611, the main body portion 612A can be supported by the fixing frame 611, the fixing frame 611 also wrapping an end of the second conductive sub-portion 612C1 adjacent to the main body portion 612A to fix the end of the second conductive sub-portion 612C1 adjacent to the main body portion 612A. The second hollow portion 611B exposes an end of the second conductive sub-portion 612C1 away from the main body portion 612A. The second conductive sub-portion 612C1 is suspended below with a gap between the second conductive sub-portion 612C1 and the positive electrode of the cell 21. The second conductive sub-portion 612C1 also forms a cantilever-like structure to enable easy deformation during welding to closely contact the electrode of the cell 21, thereby addressing the issue of poor welding between the busbar and the cell 21.

Further, the busbar 612 includes at least two main body portions 612A, and each of the main body portions 612A includes a first conductive portion 612B and a second conductive portion 612C connected to opposite ends of the main body portion 612A, respectively. In the first direction Y, adjacent two of the main body portions 612A are spaced apart from each other and arranged in a staggered configuration. Under such structure, the connected cells 21 are alternately staggered, arranging the plurality of cells 21 corresponding to the same busbar unit 610 in a staggered manner to allow the plurality of cells 21 to be closely packed together, thereby fully utilizing the internal space of the battery module and improving the energy density of the battery module.

In other embodiments, the plurality of main body portions 612A in the same busbar 612 may also be arranged side-by-side along a straight line to make the connected cell groups 21 arranged in a matrix pattern.

Further, the busbar 612 includes at least one connection portion 620, each of the at least one connection portion 620 is disposed and connected to between adjacent two of the main body portions 612A in the same busbar 612. The connection portion 620 is connected to the two main body portions 612A respectively and forms an angle with the adjacent main body portion 612A.

In one embodiment, referring to FIG. 11 and FIG. 12, each of the busbars 612 includes two main body portions 612A spaced apart along the second direction Y, the two main body portions 612A are staggered and connected by the connection portion 620. An extension direction of the connection portion 620 intersects with the second direction Y and the first direction X. The angle between the connection portion 620 and the adjacent main body portion 612A may be an acute angle or an obtuse angle. For example, the angle between the connection portion 620 and the adjacent main body portion 612A is, but not limited to, 30 degrees, 60 degrees, 120 degrees, or 150 degrees.

In one embodiment, the two main body portions 612A spaced apart along the second direction Y in the same busbar 612 and the connection portion 620 located therebetween are an integral structure, which can be formed by stamping or other processes. In other embodiments, the two main body portions 612A spaced apart along the second direction Y in the same busbar 612 and the connection portion 620 located therebetween may be a separate structure, with the components connected by welding or bonding.

In practical applications, a number of main body portions 612A arranged along the second direction Y in each of the busbars 612 is the same as a number of the cells 21 arranged along the second direction Y. The number of main body portions 612A arranged along the second direction Y in each of the busbars 612 is not limited to two as in the above embodiment, but may be, for example, one, three, or more.

Further, the first conductive portion 612B and the second conductive portion 612C have a height difference.

In one embodiment, referring to FIG. 13, the first conductive portion 612B is in the same plane as the main body portion 612A, and the second conductive portion 612C is recessed in one side surface of the main body portion 612A and protrudes from an opposite side surface of the main body portion 612A. Due to a certain height difference between the positive electrode and the negative electrode of the cell 21, to match the structure of the cell 21, the first conductive portion 612B is in the same plane as the main body portion 612A, and the second conductive portion 612C and the main body portion 612A are configured in a stepped manner to facilitate the connection between the busbar and the cell 21.

In one embodiment, as shown in FIG. 11, the integrated busbar 600 includes one busbar unit 610.

In one embodiment, the integrated busbar 600 includes at least two busbar units 610 and a plurality of connectors 630, and each of the connectors 630 is electrically connected to the busbars 612 on adjacent two of the busbar units 610.

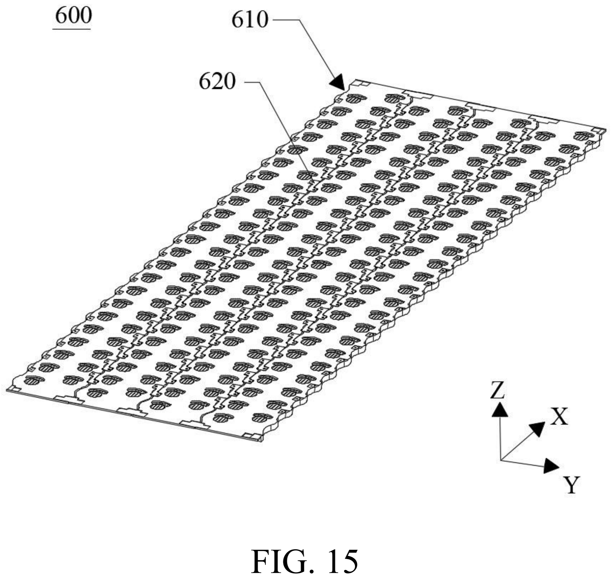

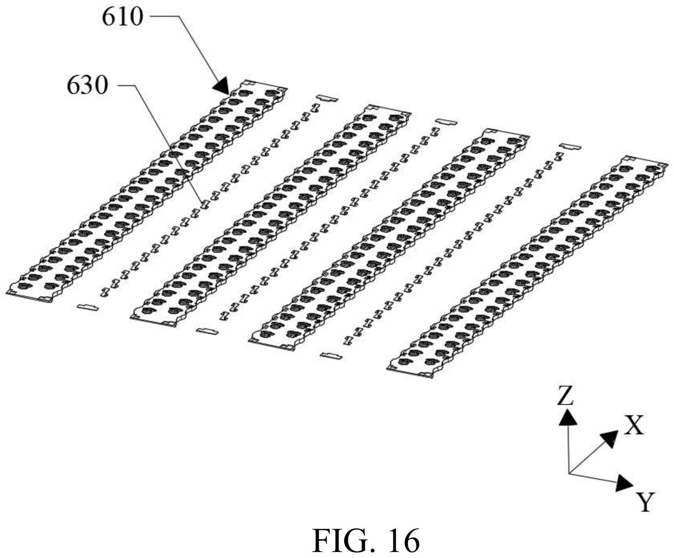

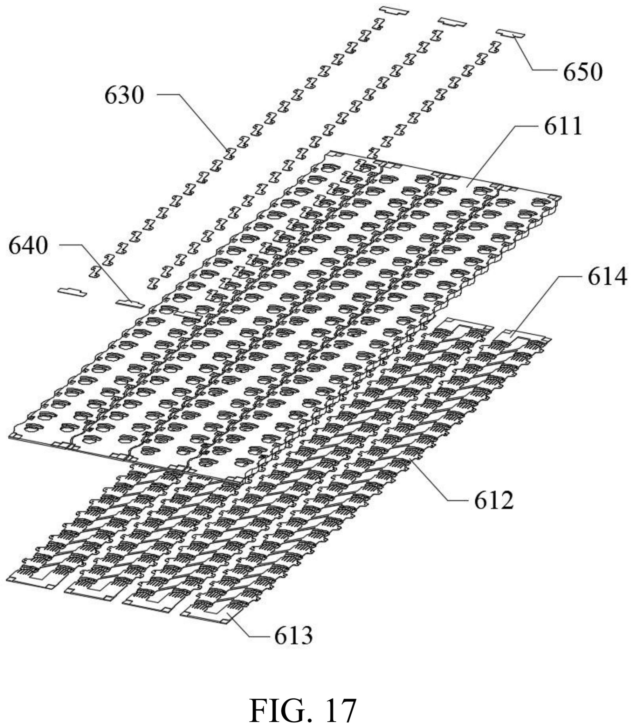

Referring to FIG. 15 to FIG. 17, FIG. 15 is a schematic structural view of another integrated busbar provided by embodiments of the present invention, FIG. 16 is an exploded schematic view of the integrated busbar provided by embodiments of the present invention, and FIG. 17 is an exploded view of the integrated busbar provided by embodiments of the present invention.

The integrated busbar 600 includes four busbar units 610. The four busbar units 610 are arranged side-by-side along the first direction Y, with a plurality of connectors 630 disposed between any adjacent two of the busbar units 610. The connectors 630 are configured to electrically connect the busbars 612 on the adjacent two of the busbar units 610.

In practical applications, the number of busbar units 610 in the integrated busbar 600 can be set according to the size of the battery module, the number of the cells 21, and other requirements, and is not limited to one or four as in the above embodiments, but may be two or other numbers. When the battery module is large, the connectors 630 can be used to splice the plurality of busbar units 610 to enable the integrated busbar provided by the embodiments of the present invention to be compatible with battery modules of various sizes and specifications.

In one embodiment, the connector 630 is welded and connected to the busbar 612. Connecting the connector 630 to the busbar 612 by welding enhances the connection strength between the connector 630 and the busbar 612, thereby preventing loosening or detachment of the connector 630 from the busbar 612 and ensuring the stability and safety of the integrated busbar.

In one embodiment, the busbar 612 further includes a welding portion 612D connected to the main body portion 612A. The welding portion 612D protrudes from an edge of the main body portion 612A along the second direction Y. The welding portion 612D is integrally formed with the main body portion 612A. The welding portion 612D is welded and connected to the connector 630.

A portion of the connector 630 connected to the welding portion 612D includes a second through hole 612D1. The fixing frame 611 includes a third hollow portion 611C. The third hollow portion 611C is adjacent to and spaced apart from the first hollow portion 611A and the second hollow portion 611B. The third hollow portion 611C exposes the welding portion 612D and the second through hole 612D1. The second through hole 612D1 on the welding portion 612D serves as a positioning hole, thereby providing positioning and fixing functions during the installation of the busbar 612. A portion of the connector 630 connected to the busbar 612 may also be provided with a through hole, which similarly serves positioning and fixing functions during the installation of the connector 630.

In one embodiment, the connector 630 is sheet-like. Specifically, the connector 630 is a flat sheet-like structure that, on one hand, reduces the weight of the integrated busbar, and on the other hand, minimizes the space occupied by the integrated busbar in the battery module, thereby contributing to improving the energy density of the battery module.

Further, the busbar unit 610 further includes an output busbar 613 and an input busbar 614. The output busbar 613 includes a third conductive portion 613A. The third conductive portion 613A includes a plurality of third conductive sub-portions 613A1 arranged side-by-side and spaced apart from each other. A portion between adjacent two of the third conductive sub-portions 613A1 is hollowed out. The third conductive sub-portion 613A1 is configured to be electrically connected to a positive electrode of the cell 21 at an output end of the battery module. The fixing frame 611 wraps the output busbar 613 and exposes the third conductive sub-portions 613A1.

The input busbar 614 includes a fourth conductive portion 614A, the fourth conductive portion 614A includes a plurality of fourth conductive sub-portions 614A1 arranged side-by-side and spaced apart from each other. A portion between adjacent two of the fourth conductive sub-portions 614A1 is hollowed out. The fourth conductive sub-portion 614A1 is configured to be electrically connected to a negative electrode of the cell 21 at an input end of the battery module. The fixing frame 611 wraps the input busbar 614 and exposes the fourth conductive sub-portions 614A1.

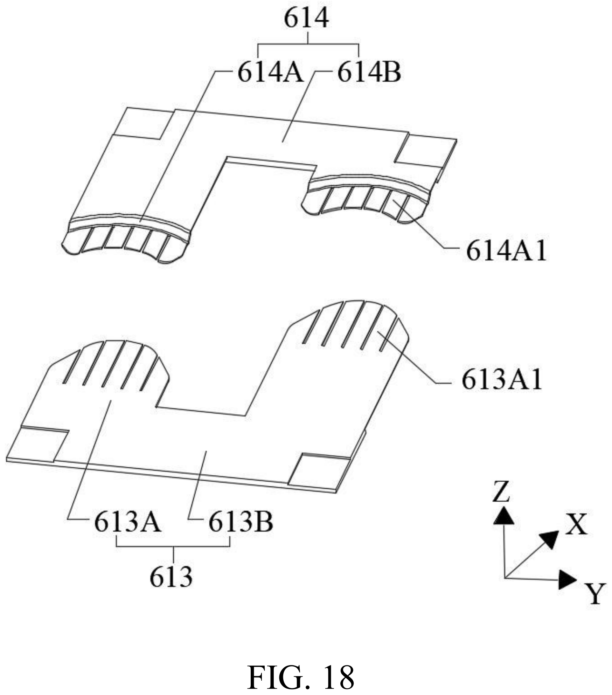

In one embodiment, referring to FIG. 17 and FIG. 18, FIG. 18 is a schematic structural view of an output busbar and an input busbar provided by embodiments of the present invention.

The output busbar 613 includes an output busbar main body 613B and two third conductive portions 613A spaced apart along the second direction Y. The third conductive portion 613A is located on the same side of the output busbar main body 613B and connected to the output busbar main body 613B. The two third conductive portions 613A are respectively electrically connected to a positive electrode of a first cell in two columns of the cells 21 arranged along the first direction X. The third conductive portion 613A is in the same plane as the output busbar main body 613B.

By dividing the third conductive portion 613A into a plurality of third conductive sub-portions 613A1 arranged side-by-side and spaced apart from each other, and hollowing out a portion between adjacent two of the third conductive sub-portions 613A1, the fixing frame 611 wraps the output busbar main body 613B and an end of the third conductive sub-portion 613A1 adjacent to the output busbar main body 613B to fix the end of the third conductive sub-portion 613A1 adjacent to the output busbar main body 613B. The first hollow portion 611A exposes an end of the third conductive sub-portion 613A1 away from the output busbar main body 613B, the third conductive sub-portion 613A1 is suspended below with a gap between the third conductive sub-portion 613A1 and the positive electrode of the cell 21, the third conductive sub-portion 613A1 forms a cantilever-like structure to enable easy deformation during welding to closely contact the electrode of the cell 21, thereby addressing the issue of poor welding between the busbar and the cell 21.

The input busbar 614 includes an input busbar main body 614B and two fourth conductive portions 614A spaced apart along the second direction Y. The fourth conductive portion 614A is located on the same side of the input busbar main body 614B and is connected to the input busbar main body 614B. The two fourth conductive portions 614A are respectively electrically connected to a positive electrode of a last cell in two columns of the cells 21 arranged along the first direction X. The fourth conductive portion 614A and the input busbar main body 614B have a height difference. The fourth conductive portion 614A and the input busbar main body 614B form a stepped structure to match a height difference between the input busbar 614 and the cell 21.

By dividing the fourth conductive portion 614A into a plurality of fourth conductive sub-portions 614A1 arranged side-by-side and spaced apart from each other, and hollowing out a portion between adjacent two of the fourth conductive sub-portions 614A1, the fixing frame 611 wraps the input busbar main body 614B and an end of the fourth conductive sub-portion 614A1 adjacent to the input busbar main body 614B to fix the end of the fourth conductive sub-portion 614A1 adjacent to the input busbar main body 614B. The second hollow portion 611B exposes an end of the fourth conductive sub-portion 614A1 away from the input busbar main body 614B. The fourth conductive sub-portion 614A1 is suspended below with a gap between the fourth conductive sub-portion 614A1 and the positive electrode of the cell 21, the fourth conductive sub-portion 614A1 forms a cantilever-like structure to enable easy deformation during welding to closely contact the electrode of the cell 21, thereby addressing the issue of poor welding between the busbar and the cell 21.

Further, referring to FIG. 15 to FIG. 17, the integrated busbar 600 further includes a plurality of output terminal connectors 640 and a plurality of input terminal connectors 650. The output terminal connectors 640 are respectively electrically connected to the output busbars 613 of adjacent two of the busbar units. The input terminal connectors 650 are respectively electrically connected to the input busbars 614 of adjacent two of the busbar units.

Specifically, the output terminal connector 640 may be fixedly connected to the output busbar 613 by welding, and the input terminal connector 650 may be fixedly connected to the input busbar 614 by welding.

In one embodiment, the output terminal connector 640 and the input terminal connector 650 are both flat sheet-like structures.

It can be understood that, in embodiments of the present invention, the integrated busbar includes at least one busbar unit, the busbar unit includes a plurality of busbars, and the busbars are located in a fixing frame. The busbar includes a main body portion, a first conductive portion, and a second conductive portion, and the first conductive portion is disposed at a first end of the main body portion and connected to the main body portion. The first conductive portion is configured to be electrically connected to a positive electrode of the cell. The second conductive portion is disposed at an opposite second end of the main body portion and connected to the main body portion, and the second conductive portion is configured to be electrically connected to a negative electrode of another adjacent one of the cells. By dividing the first conductive portion into a plurality of first conductive sub-portions spaced apart from each other and hollowing out a portion between adjacent two of the first conductive sub-portions, and dividing the second conductive portion into a plurality of second conductive sub-portions spaced apart from each other and hollowing out a portion between adjacent two of the second conductive sub-portions, the deformation capability of the plurality of first conductive sub-portions and second conductive sub-portions is superior to that of the first conductive portion and second conductive portion before hollowing out, thereby increasing the deformation capability of the first conductive portion and the second conductive portion, facilitating pressing of the first conductive portion and the second conductive portion during welding to closely contact the electrodes of the cell, thus addressing the issue of poor welding between the cell and the busbar.

Embodiments of the present invention provide an electric device, and the electric device includes the battery pack described in any of the above embodiments.

It can be understood that the battery pack has been described in detail in the above embodiments and will not be repeated here.

The battery pack includes a battery module, and the battery module is configured as a power supply for the electric device, thus the electric device also possesses the advantages of the battery module, thereby contributing to simplifying the overall structure of the electric device. The electric device may be a vehicle, an aircraft, mechanical production equipment, or the like.

## Claims

1. A battery pack, comprising:
a case body;
a battery module located in the case body, wherein the battery module comprises a plurality of cell groups spaced apart along a first direction, each of the plurality of cell groups comprises a plurality of cells, and the plurality of cells are spaced apart along a second direction; and
a reinforcement module located in the case body, wherein the reinforcement module comprises a plurality of reinforcement beams spaced apart along the first direction, two ends of each of the reinforcement beams are fixedly connected to the case body, and each of the plurality of cell groups is disposed between adjacent two of the reinforcement beams.

2. The battery pack according to claim 1, wherein the battery pack comprises a liquid cooling module, the liquid cooling module is located in the case body, the liquid cooling module comprises a plurality of liquid cooling plates, the plurality of liquid cooling plates and the plurality of reinforcement beams are alternately spaced apart along the first direction, and one of the cell groups is disposed between one of the plurality of liquid cooling plates and the one of the plurality of reinforcement beams adjacent to each other.

3. The battery pack according to claim 2, wherein the case body comprises a bottom plate and a plurality of side beams, and the plurality of side beams are fixedly disposed at an edge of the bottom plate to collectively define an accommodation cavity; and
the battery module, the reinforcement module, and the liquid cooling module are disposed in the accommodation cavity, and two ends of each of the reinforcement beams and two ends of each of the liquid cooling plates are fixedly connected to the side beams respectively.

4. The battery pack according to claim 3, wherein the reinforcement beam and/or the liquid cooling plate abuts against outer peripheral surfaces of the cells on two sides of the liquid cooling plate, and the reinforcement beam and/or the liquid cooling plate is adapted to the outer peripheral surfaces of the cells.

5. The battery pack according to claim 4, wherein the cell is a cylindrical cell, and the reinforcement beam and/or the liquid cooling plate comprises a corrugated structure adapted to an outer peripheral surface of the cylindrical cell.

6. The battery pack according to any one of claims 3 to 5, wherein the side beam comprises a plurality of first recesses and a plurality of second recesses provided in a side of the side beam adjacent to the reinforcement beam, and the plurality of first recesses and the plurality of second recesses are alternately spaced apart along the first direction;
the liquid cooling plate comprises a plurality of first inserting portions provided on a side of the liquid cooling plate adjacent to the side beam, and one of the plurality of the first inserting portions is inserted into a corresponding one of the first recesses; and
the reinforcement beam comprises a plurality of second inserting portions provided on a side of the reinforcement beam adjacent to the side beam, and each second inserting portion is inserted into a corresponding one of the second recesses.

7. The battery pack according to claim 6, wherein the second inserting portion is fixed into the second recess by welding.

8. The battery pack according to any one of claims 1 to 5, wherein the battery pack further comprises a colloid element, and the colloid element is sleeved on an outer surface of each of the cells.

9. The battery pack according to claim 8, wherein the colloid element comprises an expanding foam, the expanding foam comprises a plurality of openings provided in the expanding foam, one of the plurality of openings corresponds to one of the plurality of cells respectively, and an outer sidewall of the cell is adhered to an inner wall of each opening.

10. The battery pack according to any one of claims 3 to 5, wherein the case body further comprises a support frame, the support frame is disposed between the bottom plate and the battery module, and the support frame is fixedly connected to the reinforcement module and the bottom plate respectively; and
the support frame comprises a plurality of mounting slots, a depth of the mounting slot is less than a thickness of the support frame, one of the plurality of mounting slots corresponds to one of the plurality of cells, and the cell is placed in the mounting slot.

11. The battery pack according to claim 10, wherein the mounting slots is spaced apart from the reinforcement beam; and/or, adjacent two of the mounting slots are arranged side-by-side or staggered.

12. The battery pack according to claim 10, wherein the support frame, the bottom plate, and the side beams collectively define a pressure relief cavity; and
the support frame further comprises a plurality of first through holes, one of the plurality of first through holes corresponds to one of the plurality of mounting slots, an aperture diameter of the first through hole is less than a diameter of the mounting slot, the first through hole extends through the mounting slot, and the first through hole communicates with the pressure relief cavity.

13. The battery pack according to claim 10, wherein at least one of the support frame and the reinforcement beam comprises a plurality of fixing holes, and the other comprises a plurality of protrusions, one of the plurality of protrusions corresponds to one of the plurality of fixing holes, and the protrusion is snap-fitted into the fixing hole.

14. The battery pack according to claim 13, wherein the protrusion is fixed into the fixing hole by welding.

15. The battery pack according to claim 13, wherein the fixing hole is located between adjacent two of the mounting slots, and the fixing hole is spaced apart from the mounting slot.

16. The battery pack according to claim 10, wherein the support frame comprises a plurality of holes, the bottom plate comprises a plurality of connection holes, and one of the plurality of connection holes corresponds to one of the plurality of holes; and
the case body comprises a plurality of fixing members, one of the plurality of fixing members corresponds to one of the plurality of holes, and each fixing member sequentially passes through the hole and the connection hole and is fixedly connected to the bottom plate.

17. The battery pack according to claim 16, wherein the hole is located between adjacent two of the mounting slots, and the opening is spaced apart from the mounting slot.

18. The battery pack according to any one of claims 3 to 5, wherein the case body further comprises two longitudinal beams disposed opposite to each other along the second direction, each of the two longitudinal beams is located on a side of the side beam away from the reinforcement beam, the longitudinal beam comprises a plurality of mounting parts spaced apart along the first direction, and the mounting parts correspond one-to-one with the reinforcement beams.

19. The battery pack according to any one of claims 3 to 5, wherein a thickness of the reinforcement beam is greater than or equal to 1 millimeter and less than or equal to 4 millimeters.

20. The battery pack according to any one of claims 3 to 5, wherein the battery pack further comprises a battery module acquiring integration assembly, the battery module acquiring integration assembly is disposed on a side of the battery module away from the bottom plate, and the battery module acquiring integration assembly comprises:
a fixing frame comprising a hollow portion; and
a busbar arranged in the hollow portion, wherein the busbar contacts and electrically connects the cell.

21. The battery pack according to claim 20, wherein the battery module acquiring integration assembly comprises an integrated busbar configured to electrically connect the plurality of cells, the integrated busbar comprises at least one busbar unit, and the busbar unit comprises the busbar; and
wherein the busbar comprises a main body portion, a first conductive portion, and a second conductive portion, the first conductive portion is disposed at a first end of the main body portion and connected to the main body portion, the first conductive portion comprises a plurality of first conductive sub-portions arranged side-by-side and spaced apart from each other, a portion between adjacent two of the first conductive sub-portions is hollowed out, the first conductive sub-portion is configured to be electrically connected to a positive electrode of the cell; the second conductive portion is disposed at a second end of the main body portion and is connected to the main body portion, the second conductive portion comprises a plurality of second conductive sub-portions arranged side-by-side and spaced apart from each other, a portion between adjacent two of the second conductive sub-portions is hollowed out, and the second conductive sub-portion is configured to be electrically connected to a negative electrode of another adjacent one of the cells.

22. The battery pack according to claim 21, wherein the fixing frame wraps the main body portion and exposes the first conductive sub-portion and the second conductive sub-portion.

23. The battery pack according to claim 21, wherein the first conductive portion and the second conductive portion have a height difference.

24. The battery pack according to claim 23, wherein the first conductive portion is in the same plane as the main body portion, and the second conductive portion is recessed in one side surface of the main body portion and protrudes from an opposite side surface of the main body portion.

25. The battery pack according to claim 21, wherein the busbar comprises at least two main body portions, opposite ends of each of the two main body portions are connected to the first conductive portion and the second conductive portion respectively; and
adjacent two of the main body portions are spaced apart from each other and arranged in a staggered configuration.

26. The battery pack according to claim 25, wherein the busbar comprises at least one connection portion, each of the at least one connection portion is disposed between and connected to adjacent two of the main body portions, and the connection portion is oriented at an angle relative to the adjacent main body portion.

27. The battery pack according to any one of claims 21 to 26, wherein the fixing frame comprises a plurality of first hollow portions and a plurality of second hollow portions, and the first hollow portion is adjacent to and spaced apart from the second hollow portion; and
the fixing frame wraps the main body portion, an end of the first conductive sub-portion is adjacent to the main body portion, an end of the second conductive sub-portion is adjacent to the main body portion, the first hollow portion exposes an end of the first conductive sub-portion away from the main body portion, and the second hollow portion exposes an end of the second conductive sub-portion away from the main body portion.

28. The battery pack according to claim 21, wherein the integrated busbar comprises at least two busbar units and a plurality of connectors, and each of the connectors is electrically connected to the busbars on adjacent two of the busbar units.

29. The battery pack according to claim 28, wherein the connector is welded and connected to the busbar.

30. The battery pack according to claim 29, wherein the busbar comprises a welding portion connected to the main body portion, the welding portion is welded and connected to the connector, a portion of the connector connected to the welding portion comprises a second through hole, and the fixing frame exposes the welding portion and the second through hole.

31. The battery pack according to any one of claims 28 to 30, wherein the busbar unit further comprises:
an output busbar comprising a third conductive portion, wherein the third conductive portion comprises a plurality of third conductive sub-portions arranged side-by-side and spaced apart from each other, a portion between adjacent two of the third conductive sub-portions is hollowed out, the third conductive sub-portion is configured to be electrically connected to a positive electrode of the cell at an output end of the battery module, and the fixing frame wraps the output busbar and exposes the third conductive sub-portions; and
an input busbar comprising a fourth conductive portion, wherein the fourth conductive portion comprises a plurality of fourth conductive sub-portions arranged side-by-side and spaced apart from each other, a portion between adjacent two of the fourth conductive sub-portions is hollowed out, the fourth conductive sub-portion is configured to be electrically connected to a negative electrode of the cell at an input end of the battery module, and the fixing frame wraps the input busbar and exposes the fourth conductive sub-portions.

32. The battery pack according to any one of claims 21 to 26, wherein the busbar and the fixing frame are integrally injection-molded.

33. An electric device, comprising a battery pack, and the battery pack comprising:
a case body;
a battery module located in the case body, wherein the battery module comprises a plurality of cell groups spaced apart along a first direction, each of the plurality of cell groups comprises a plurality of cells, and the plurality of cells are spaced apart along a second direction; and
a reinforcement module located in the case body, wherein the reinforcement module comprises a plurality of reinforcement beams spaced apart along the first direction, two ends of each of the reinforcement beams are fixedly connected to the case body, and each of the plurality of cell groups is disposed between adjacent two of the reinforcement beams.
